(19) Europäisches Patentamt
European Patent Office
Office européen des brevets

(11) EP 3 594 249 A1

(12) **EUROPEAN PATENT APPLICATION**
published in accordance with Art. 153(4) EPC

(43) Date of publication:
**15.01.2020 Bulletin 2020/03**

(21) Application number: **18763936.4**

(22) Date of filing: **09.03.2018**

(51) Int Cl.:
***C08C 19/22*** *(2006.01)* ***B60C 1/00*** *(2006.01)*
***C08K 3/04*** *(2006.01)* ***C08K 3/36*** *(2006.01)*
***C08L 15/00*** *(2006.01)* ***C08L 21/00*** *(2006.01)*

(86) International application number:
**PCT/JP2018/009121**

(87) International publication number:
**WO 2018/164248 (13.09.2018 Gazette 2018/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.03.2017 JP 2017046731**

(71) Applicant: **Otsuka Chemical Co., Ltd.**
**Osaka-shi, Osaka 540-0021 (JP)**

(72) Inventors:
- **SATO, Takashi**
**Tokushima-shi**
**Tokushima 771-0193 (JP)**
- **YUASA, Hiroaki**
**Tokushima-shi**
**Tokushima 771-0193 (JP)**
- **NAKASHIMA, Shinya**
**Tokushima-shi**
**Tokushima 771-0193 (JP)**

(74) Representative: **Vossius & Partner**
**Patentanwälte Rechtsanwälte mbB**
**Siebertstrasse 3**
**81675 München (DE)**

(54) **REACTION PRODUCT AND RUBBER COMPOSITION**

(57) The invention provides a reaction product of a diene rubber with a tetrazine compound represented by Formula (1) or a salt thereof:

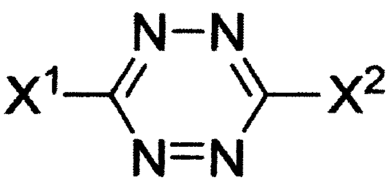

(1)

wherein $X^1$ and $X^2$ are identical or different and each represent a hydrogen atom, or an alkyl, alkylthio, aralkyl, aryl, arylthio, heterocyclic, or amino group; each of these groups may have one or more substituents.

Fig. 6

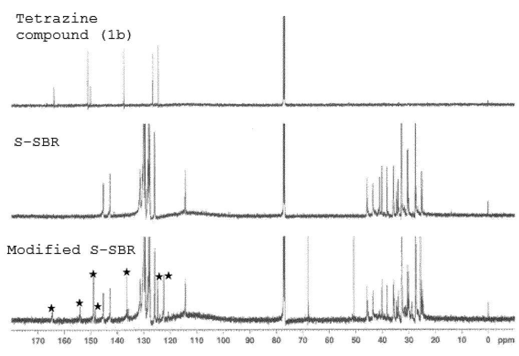


★ : Newly detected peaks

EP 3 594 249 A1

## Description

Technical Field

The present invention relates to a reaction product and a rubber composition.

Background Art

Recent environmental concerns have led to strict international regulations on carbon dioxide emissions and a highly increased demand for lower fuel consumption in automobiles. While the efficiency of drive systems such as engines, as well as transmission systems, greatly contributes to lower fuel consumption, rolling resistance of tires is also largely involved in lower fuel consumption. For lower fuel consumption in automobiles, reducing rolling resistance is important.

As a method for reducing the rolling resistance of tires, applying a rubber composition with low heat build-up to tires is known. Examples of such rubber compositions with low heat build-up include (1) a rubber composition comprising a functionalized polymer having increased affinity to carbon black and silica as fillers (Patent Literature (PTL) 1); (2) a rubber composition comprising a diene elastomer, an inorganic filler as a reinforcing filler, polysulphurized alkoxysilane as a coupling agent, 1,2-dihydropyridine, and a guanidine derivative (Patent Literature (PTL) 2); (3) a rubber composition comprising a rubber component, an aminopyridine derivative, and an inorganic filler (Patent Literature (PTL) 3); (4) a rubber composition comprising a terminal-modified polymer and an inorganic filler (Patent Literature (PTL) 4 and Patent Literature PTL 5); and the like.

According to the inventions disclosed in PTL 1 to PTL 5, heat build-up of a rubber composition can be reduced by increasing affinity between fillers and a rubber component. As a result, a tire with low hysteresis loss (rolling resistance) can be obtained.

However, the rubber compositions disclosed in PTL 1 to PTL 5 are insufficient in terms of further reducing heat build-up. Moreover, a further reduction in heat build-up of a rubber composition inevitably causes a reduction in abrasion resistance.

With increasing demand for lower fuel consumption of automobiles, the development of tires that have excellent low heat build-up properties has been desired.

Citation List

Patent Literature

PTL 1: JP2003-514079A
PTL 2: JP2003-523472A
PTL 3: JP2013-108004A
PTL 4: JP2000-169631A
PTL 5: JP2005-220323A

Summary of Invention

Technical Problem

An object of the present invention is to provide a reaction product that is capable of imparting low heat build-up properties.

Another object of the present invention is to provide a rubber composition that is capable of exhibiting low heat build-up properties, while maintaining abrasion resistance.

Solution to Problem

As a result of extensive research to achieve the above objects, the present inventors found that incorporation of a reaction product obtained by reaction of a tetrazine compound with a diene rubber into a rubber composition makes it possible to maintain abrasion resistance, in addition to achieving a significant reduction in heat build-up of the rubber composition. The inventors further conducted research based on the above findings. The present invention has thus been completed.

More specifically, the present invention provides the following reaction product, rubber composition, and the like.

Item 1. A reaction product of a diene rubber with a tetrazine compound represented by Formula (1) or a salt thereof:

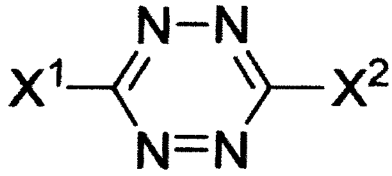

(1)

wherein $X^1$ and $X^2$ are identical or different and each represent a hydrogen atom, or an alkyl, alkylthio, aralkyl, aryl, arylthio, heterocyclic, or amino group; each of these groups may have one or more substituents.

Item 2. The reaction product according to Item 1, wherein the tetrazine compound is represented by Formula (1) in which $X^1$ and $X^2$ represent a heterocyclic group.

Item 3. The reaction product according to Item 1 or 2, wherein the diene rubber is at least one member selected from the group consisting of natural rubber, isoprene rubber, and rubber obtained by polymerization of monomers including 1,3-butadiene monomer.

Item 4. A rubber composition comprising the reaction product of any one of Items 1 to 3, and an inorganic filler and/or carbon black.

Item 5. A rubber composition comprising the reaction product of any one of Items 1 to 3 produced using the diene rubber, the tetrazine compound represented by Formula (1) or a salt thereof, and an inorganic filler and/or carbon black.

Item 6. The rubber composition according to Item 4 or 5, further comprising rubber other than the diene rubber. Item 7.

The rubber composition according to Item 6, wherein the diene rubber is present in an amount of 70 parts by mass or more, per 100 parts by mass in total of the diene rubber and the rubber other than the diene rubber.

Item 8. The rubber composition according to any one of Items 4 to 7, wherein the inorganic filler is silica.

Item 9. The rubber composition according to Item 8, wherein the silica is present in an amount of 20 to 120 parts by mass, per 100 parts by mass of the reaction product of any one of Items 1 to 3.

Item 10. The rubber composition according to Item 8 or 9, wherein the silica is wet silica.

Item 11. The rubber composition according to any one of Items 4 to 10, which is used for at least one member selected from the group consisting of tread, sidewall, bead area, belt, carcass, and shoulder portions.

Item 12. The rubber composition according to any one of Items 4 to 10, which is used for at least one member selected from the group consisting of tread and sidewall portions. Item 13.

A tire tread produced using the rubber composition of any one of Items 4 to 10.

Item 14. A tire sidewall produced using the rubber composition of any one of Items 4 to 10.

Item 15. A pneumatic tire comprising the tire tread of Item 13 or the tire sidewall of Item 14.

## Advantageous Effects of Invention

The reaction product of the present invention is obtained by reaction of a tetrazine compound with a diene rubber. A rubber composition comprising this reaction product is capable of exhibiting low heat build-up properties. Moreover, the use of the reaction product of the present invention enables excellent dispersion of an inorganic filler and/or carbon black in the rubber composition, and improves abrasion resistance.

Accordingly, the use of the rubber composition that is capable of exhibiting low heat build-up properties while maintaining abrasion resistance in the production of a tire can achieve reduced rolling resistance of the tire, and lowered heat build-up of the tire; while maintaining abrasion resistance, thus providing a fuel-efficient tire that maintains abrasion resistance.

## Brief Description of Drawings

Fig. 1 is a $^{13}C$-NMR chart of a tetrazine compound (1b).
Fig. 2 is a $^{13}C$-NMR chart of solution-polymerized SBR.
Fig. 3 is an enlarged view of Fig. 2.
Fig. 4 is a $^{13}C$-NMR chart of the reaction product of a tetrazine compound (1b) with solution-polymerized SBR.

Fig. 5 is an enlarged view of Fig. 4.

Fig. 6 shows $^{13}C$-NMR charts of the tetrazine compound (1b), the solution-polymerized SBR (S-SBR), and the reaction product (modified S-SBR), for comparison.

## Description of Embodiments

The present invention is described in detail below.

### 1. Reaction Product

The reaction product of the present invention is a reaction product of a tetrazine compound represented by Formula (1) or a salt thereof:

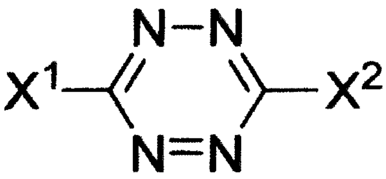

(1)

wherein $X^1$ and $X^2$ are identical or different and each represent a hydrogen atom, or an alkyl, alkylthio, aralkyl, aryl, arylthio, heterocyclic, or amino group; each of these groups may have one or more substituents (which hereinafter may be referred to as "the tetrazine compound (1)"),
with a diene rubber.

The reaction product of the present invention is obtained by treating a diene rubber using the tetrazine compound (1).

The reaction product may further be modified by allowing the tetrazine compound (1) to act on a diene rubber modified with an epoxy, amino, alkoxy, alkoxysilyl, hydroxy, polyether, carboxyl, or like group.

The raw materials for producing the reaction product of the present invention include the tetrazine compound (1) and a diene rubber. The rubber component as a raw material may contain rubber other than diene rubber, in addition to diene rubber. Diene rubber is preferably present, for example, in an amount of 70 parts by mass or more, and more preferably 80 parts by mass or more, per 100 parts by mass of the rubber component used; it is more preferable that diene rubber be present in an amount of 100 parts by mass. The amount of the tetrazine compound (1) is not particularly limited. The amount may be appropriately adjusted so that the tetrazine compound (1) is generally present, for example, in an amount of 0.1 to 10 parts by mass, preferably 0.2 to 5 parts by mass, and more preferably 0.5 to 2 parts by mass, per 100 parts by mass of the rubber component of the rubber composition described below.

### Tetrazine Compound (1)

The tetrazine compound (1) is represented by Formula (1) :

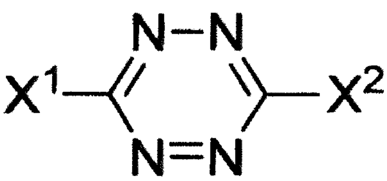

(1)

wherein $X^1$ and $X^2$ are as defined above.

The "alkyl" as used herein is not particularly limited. Examples include linear, branched, or cyclic alkyl groups. Specific examples include $C_{1-6}$ (particularly $C_{1-4}$) linear or branched alkyl groups, such as methyl, ethyl, n-propyl, isopropyl, n-butyl, isobutyl, s-butyl, t-butyl, 1-ethylpropyl, n-pentyl, neopentyl, n-hexyl, isohexyl, and 3-methylpentyl; $C_{3-8}$ (particularly $C_{3-6}$) cyclic alkyl groups, such as cyclopropyl, cyclobutyl, cyclopentyl, cyclohexyl, cycloheptyl, and cyclooctyl; and the like. The alkyl group is preferably a $C_{1-6}$ linear or branched alkyl group, more preferably methyl, ethyl, n-propyl, isopropyl, n-butyl, isobutyl, or n-pentyl, and particularly preferably methyl or ethyl.

The "alkylthio" as used herein is not particularly limited. Examples include linear, branched, or cyclic alkylthio groups. Specific examples include $C_{1-6}$ (particularly $C_{1-4}$) linear or branched alkylthio groups, such as methylthio, ethylthio, n-propylthio, isopropylthio, n-butylthio, isobutylthio, s-butylthio, t-butylthio, 1-ethylpropylthio, n-pentylthio, neopentylthio,

n-hexylthio, isohexylthio, and 3-methylpentylthio; $C_{3-8}$ (particularly $C_{3-6}$) cyclic alkylthio groups, such as cyclopropylthio, cyclobutylthio, cyclopentylthio, cyclohexylthio, cycloheptylthio, and cyclooctylthio; and the like. The alkylthio group is preferably methylthio, ethylthio, isopropylthio, or isobutylthio, and more preferably methylthio or ethylthio.

The "aralkyl" as used herein is not particularly limited. Examples include benzyl, phenethyl, trityl, 1-naphthylmethyl, 2-(1-naphthyl)ethyl, 2-(2-naphthyl)ethyl, and the like. The aralkyl group is preferably benzyl or phenethyl, and more preferably benzyl.

The "aryl" as used herein is not particularly limited. Examples include phenyl, biphenyl, naphthyl, dihydroindenyl, 9H-fluorenyl, and the like. The aryl group is preferably phenyl or naphthyl, and more preferably phenyl.

The "arylthio" as used herein is not particularly limited. Examples include phenylthio, biphenylthio, naphthylthio, and the like.

The "heterocyclic group" as used herein is not particularly limited. Examples include 2-pyridyl, 3-pyridyl, 4-pyridyl, 2-pyrazinyl, 2-pyrimidyl, 4-pyrimidyl, 5-pyrimidyl, 3-pyridazyl, 4-pyridazyl, 4-(1,2,3-triazyl), 5-(1,2,3-triazyl), 2-(1,3,5-triazyl), 3-(1,2,4-triazyl), 5-(1,2,4-triazyl), 6-(1,2,4-triazyl), 2-quinolyl, 3-quinolyl, 4-quinolyl, 5-quinolyl, 6-quinolyl, 7-quinolyl, 8-quinolyl, 1-isoquinolyl, 3-isoquinolyl, 4-isoquinolyl, 5-isoquinolyl, 6-isoquinolyl, 7-isoquinolyl, 8-isoquinolyl, 2-quinoxalyl, 3-quinoxalyl, 5-quinoxalyl, 6-quinoxalyl, 7-quinoxalyl, 8-quinoxalyl, 3-cinnolyl, 4-cinnolyl, 5-cinnolyl, 6-cinnolyl, 7-cinnolyl, 8-cinnolyl, 2-quinazolyl, 4-quinazolyl, 5-quinazolyl, 6-quinazolyl, 7-quinazolyl, 8-quinazolyl, 1-phthalazyl, 4-phthalazyl, 5-phthalazyl, 6-phthalazyl, 7-phthalazyl, 8-phthalazyl, 1-tetrahydroquinolyl, 2-tetrahydroquinolyl, 3-tetrahydroquinolyl, 4-tetrahydroquinolyl, 5-tetrahydroquinolyl, 6-tetrahydroquinolyl, 7-tetrahydroquinolyl, 8-tetrahydroquinolyl, 1-pyrrolyl, 2-pyrrolyl, 3-pyrrolyl, 2-furyl, 3-furyl, 2-thienyl, 3-thienyl, 1-imidazolyl, 2-imidazolyl, 4-imidazolyl, 5-imidazolyl, 1-pyrazolyl, 3-pyrazolyl, 4-pyrazolyl, 5-pyrazolyl, 2-oxazolyl, 4-oxazolyl, 5-oxazolyl, 2-thiazolyl, 4-thiazolyl, 5-thiazolyl, 3-isoxazolyl, 4-isoxazolyl, 5-isoxazolyl, 3-isothiazolyl, 4-isothiazolyl, 5-isothiazolyl, 4-(1,2,3-thiadiazolyl), 5-(1,2,3-thiadiazolyl), 3-(1,2,5-thiadiazolyl), 2-(1,3,4-thiadiazolyl), 4-(1,2,3-oxadiazolyl), 5-(1,2,3-oxadiazolyl), 3-(1,2,4-oxadiazolyl), 5-(1,2,4-oxadiazolyl), 3-(1,2,5-oxadiazolyl), 2-(1,3,4-oxadiazolyl), 1-(1,2,3-triazolyl), 4-(1,2,3-triazolyl), 5-(1,2,3-triazolyl), 1-(1,2,4-triazolyl), 3-(1,2,4-triazolyl), 5-(1,2,4-triazolyl), 1-tetrazolyl, 5-tetrazolyl, 1-indolyl, 2-indolyl, 3-indolyl, 4-indolyl, 5-indolyl, 6-indolyl, 7-indolyl, 1-isoindolyl, 2-isoindolyl, 3-isoindolyl, 4-isoindolyl, 5-isoindolyl, 6-isoindolyl, 7-isoindolyl, 1-benzimidazolyl, 2-benzimidazolyl, 4-benzimidazolyl, 5-benzimidazolyl, 6-benzimidazolyl, 7-benzimidazolyl, 2-benzofuranyl, 3-benzofuranyl, 4-benzofuranyl, 5-benzofuranyl, 6-benzofuranyl, 7-benzofuranyl, 1-isobenzofuranyl, 3-isobenzofuranyl, 4-isobenzofuranyl, 5-isobenzofuranyl, 6-isobenzofuranyl, 7-isobenzofuranyl, 2-benzothienyl, 3-benzothienyl, 4-benzothienyl, 5-benzothienyl, 6-benzothienyl, 7-benzothienyl, 2-benzoxazolyl, 4-benzoxazolyl, 5-benzoxazolyl, 6-benzoxazolyl, 7-benzoxazolyl, 2-benzothiazolyl, 4-benzothiazolyl, 5-benzothiazolyl, 6-benzothiazolyl, 7-benzothiazolyl,1-indazolyl, 3-indazolyl, 4-indazolyl, 5-indazolyl, 6-indazolyl, 7-indazolyl, 2-morpholyl, 3-morpholyl, 4-morpholyl, 1-piperazyl, 2-piperazyl, 1-piperidyl, 2-piperidyl, 3-piperidyl, 4-piperidyl, 2-tetrahydropyranyl, 3-tetrahydropyranyl, 4-tetrahydropyranyl, 2-tetrahydrothiopyranyl, 3-tetrahydrothiopyranyl, 4-tetrahydrothiopyranyl, 1-pyrrolidyl, 2-pyrrolidyl, 3-pyrrolidyl, 2-tetrahydrofuranyl, 3-tetrahydrofuranyl, 2-tetrahydrothienyl, 3-tetrahydrothienyl, and the like. Among these, the heterocyclic group is preferably pyridyl, furanyl, thienyl, pyrimidyl, or pyrazyl, and is more preferably pyridyl.

The "amino" as used herein includes an amino group represented by $-NH_2$ and substituted amino groups. Examples of substituted amino groups include $C_{1-6}$ (particularly $C_{1-4}$) linear or branched monoalkylamino groups, such as methylamino, ethylamino, n-propylamino, isopropylamino, n-butylamino, isobutylamino, s-butylamino, t-butylamino, 1-ethylpropylamino, n-pentylamino, neopentylamino, n-hexylamino, isohexylamino, and 3-methylpentylamino; and dialkylamino groups having two $C_{1-6}$ (particularly $C_{1-4}$) linear or branched alkyl groups, such as dimethylamino, ethlmethylamino, and diethylamino.

Each of the alkyl, alkylthio, aralkyl, aryl, arylthio, heterocyclic, and amino groups may have one or more substituents. The "substituent" is not particularly limited. Examples of substituents include halogen atoms and amino, aminoalkyl, alkoxycarbonyl, acyl, acyloxy, amide, carboxyl, carboxyalkyl, formyl, nitrile, nitro, alkyl, hydroxyalkyl, hydroxy, alkoxy, aryl, aryloxy, heterocyclic, thiol, alkylthio, arylthio, and like groups. The number of substituents is preferably 1 to 5, and more preferably 1 to 3.

The "halogen atom" as used herein includes fluorine, chlorine, bromine, and iodine atoms. Preferable halogen atoms are chlorine, bromine, and iodine atoms.

The "aminoalkyl" as used herein is not particularly limited. Examples include aminoalkyl groups, such as aminomethyl, 2-aminoethyl, and 3-aminopropyl.

The "alkoxycarbonyl" as used herein is not particularly limited. Examples include methoxycarbonyl, ethoxycarbonyl, and the like.

The "acyl" as used herein is not particularly limited. Examples include $C_{1-4}$ linear or branched alkylcarbonyl groups, such as acetyl, propionyl, and pivaloyl.

The "acyloxy" as used herein is not particularly limited. Examples include acetyloxy, propionyloxy, n-butyryloxy, and the like.

The "amide" as used herein is not particularly limited. Examples include carboxylic acid amide groups, such as acetamide and benzamide; thioamides such as thioacetamide and thiobenzamide; N-substituted amides such as N-methylacetamide and N-benzylacetamide; and the like.

The "carboxyalkyl" as used herein is not particularly limited. Examples include carboxy-alkyl groups (preferably carboxy-containing alkyl groups having 1 to 6 carbon atoms), such as carboxymethyl, carboxyethyl, carboxy-n-propyl, carboxy-n-butyl, carboxy-n-butyl, carboxy-n-pentyl, and carboxy-n-hexyl.

The "hydroxyalkyl" as used herein is not particularly limited. Examples include hydroxyalkyl groups (hydroxy-containing alkyl groups having 1 to 6 carbon atoms), such as hydroxymethyl, hydroxyethyl, hydroxy-n-propyl, and hydroxy-n-butyl.

The "alkoxy" as used herein is not particularly limited. Examples include linear, branched, or cyclic alkoxy groups. Specific examples include $C_{1-6}$ (particularly $C_{1-4}$) linear or branched alkoxy groups, such as methoxy, ethoxy, n-propoxy, isopropoxy, n-butoxy, t-butoxy, n-pentyloxy, neopentyloxy, and n-hexyloxy; $C_{3-8}$ (particularly $C_{3-6}$) cyclic alkoxy groups, such as cyclopropyloxy, cyclobutyloxy, cyclopenthyloxy, cyclohexyloxy, cycloheptyloxy, and cyclooctyloxy; and the like.

The "aryloxy" as used herein is not particularly limited. Examples include phenoxy, biphenyloxy, naphthoxy, and the like.

The "salt" of the tetrazine compound represented by Formula (1) is not particularly limited and includes all types of salts. Examples of such salts include inorganic acid salts such as hydrochloride, sulfate, and nitrate; organic acid salts such as acetate and methanesulfonate; alkali metal salts such as sodium salt and potassium salt; alkaline earth metal salts such as magnesium salt and calcium salt; ammonium salts such as dimethyl ammonium and triethyl ammonium; and the like.

Of these tetrazine compounds (1), preferable compounds are those wherein $X^1$ and $X^2$ are the same or different and represent an optionally substituted alkyl group, an optionally substituted aralkyl group, an optionally substituted aryl group, or an optionally substituted heterocyclic group.

More preferable tetrazine compounds (1) are those wherein $X^1$ and $X^2$ are the same or different and represent an optionally substituted aralkyl group, an optionally substituted aryl group, or an optionally substituted heterocyclic group.

Still more preferable tetrazine compounds (1) are those wherein $X^1$ and $X^2$ are the same or different and represent an optionally substituted benzyl group, an optionally substituted phenyl group, an optionally substituted 2-pyridyl group, an optionally substituted 3-pyridyl group, an optionally substituted 4-pyridy group, an optionally substituted 2-furanyl group, an optionally substituted 2-thienyl group, an optionally substituted 1-pyrazolyl group, an optionally substituted 2-pyrimidyl group, or an optionally substituted 2-pyrazyl group. Among these, compounds wherein $X^1$ and $X^2$ are the same or different and represent an optionally substituted 2-pyridyl, an optionally substituted 3-pyridyl group, an optionally substituted 4-pyridyl group, or an optionally substituted 2-furanyl group are particularly preferable.

Specific examples of the tetrazine compound (1) include 1,2,4,5-tetrazine, 3,6-bis(2-pyridyl)-1,2,4,5-tetrazine, 3,6-bis(3-pyridyl)-1,2,4,5-tetrazine, 3,6-bis(4-pyridyl)-1,2,4,5-tetrazine, 3,6-diphenyl-1,2,4,5-tetrazine, 3,6-dibenzyl-1,2,4,5-tetrazine, 3,6-bis(2-furanyl)-1,2,4,5-tetrazine, 3-methyl-6-(3-pyridyl)-1,2,4,5-tetrazine, 3,6-bis(3,5-dimethyl-1-pyrazolyl)-1,2,4,5-tetrazine, 3,6-bis(2-thienyl)-1,2,4,5-tetrazine, 3-methyl-6-(2-pyridyl)-1,2,4,5-tetrazine, 3,6-bis(4-hydroxyphenyl)-1,2,4,5-tetrazine, 3,6-bis(3-hydroxyphenyl)-1,2,4,5-tetrazine, 3,6-bis(2-pyrimidinyl)-1,2,4,5-tetrazine, 3,6-bis(2-pyrazyl)-1,2,4,5-tetrazine, and the like.

Among these, preferable tetrazine compounds (1) are 3,6-bis(2-pyridyl)-1,2,4,5-tetrazine, 3,6-bis(3-pyridyl)-1,2,4,5-tetrazine, 3,6-bis(4-pyridyl)-1,2,4,5-tetrazine, 3,6-bis(2-furanyl)-1,2,4,5-tetrazine, 3-methyl-6-(3-pyridyl)-1,2,4,5-tetrazine, and 3-methyl-6-(2-pyridyl)-1,2,4,5-tetrazine. More preferable tetrazine compounds (1) are 3,6-bis(2-pyridyl)-1,2,4,5-tetrazine, 3,6-bis(3-pyridyl)-1,2,4,5-tetrazine, and 3,6-bis(4-pyridyl)-1,2,4,5-tetrazine.

The addition of the tetrazine compound (1) to a diene rubber-containing rubber component causes a reaction of the tetrazine compound (1) with the diene rubber to form a reaction product, whereby low heat build-up properties can be imparted to the rubber component. A tire manufactured (produced) from a rubber composition comprising the tetrazine compound (1) has low heat build-up, which reduces rolling resistance, thus exhibiting low fuel consumption performance.

When the tetrazine compound (1) is a powder, the volume mean diameter is not particularly limited. From the viewpoint of imparting low heat build-up properties, the volume mean diameter is preferably 300 $\mu$m or less, more preferably 150 $\mu$m or less, and particularly preferably 75 $\mu$m or less.

The volume mean diameter can be determined as a particle diameter corresponding to 50% on the cumulative size distribution curve from the volume-based particle size distribution by using a particle size distribution analyzer based on laser optical diffraction or the like.

Further, from the viewpoint of the handling at the time of use and of reducing the ignition or explosion risk, the powder may be surface-treated with oil, a resin, a stearic acid, or the like, or the powder may be used by mixing with, for example, a filler, such as calcium carbonate and silica.

Diene Rubber

Examples of diene rubber include natural rubbers (NR), synthetic diene rubbers, and a mixture of natural rubber and synthetic diene rubber.

Examples of natural rubbers include natural rubber latex, technically specified rubber (TSR), ribbed smoked sheet (RSS), gutta-percha, *Chinese gulta percha (Eucommia ulmoides)*-derived natural rubber, guayule-derived natural rubber, Russian dandelion (*Taraxacum kok-saghyz*)-derived natural rubber, plant component-fermented rubber, and the like. Examples of natural rubbers of the present invention further include modified natural rubbers obtained by modifying these rubbers, such as epoxidated natural rubber, methacrylic acid modified natural rubber, and styrene modified natural rubber.

Examples of synthetic diene rubbers include styrenebutadiene copolymer rubber (SBR), butadiene rubber (BR), isoprene rubber (IR), nitrile rubber (NBR), chloroprene rubber (CR), ethylene-propylene-diene terpolymer rubber (EPDM), styreneisoprene-styrene triblock copolymer (SIS), styrene-butadienestyrene triblock copolymer (SBS), and the like; and modified synthetic diene rubbers thereof. Examples of modified synthetic diene rubbers include main chain-modified, one-terminal-modified, both-terminals-modified, or like modified diene rubbers. Examples of modified functional groups of modified synthetic diene rubbers include various functional groups, such as epoxy, amino, alkoxysilyl, and hydroxy groups. Modified synthetic diene rubbers may contain one or more such functional groups.

The method for producing a synthetic diene rubber is not particularly limited. Examples of production methods include emulsion polymerization, solution polymerization, radical polymerization, anionic polymerization, cationic polymerization, and the like. The glass transition point of the synthetic diene rubber is also not particularly limited.

The cis/trans/vinyl ratio of the double bond portions of natural rubber and synthetic diene rubber is not particularly limited. The rubber at any cis/trans/vinyl ratio can be preferably used. The number average molecular weight and molecular weight distribution of the diene rubber are not particularly limited. The diene rubber preferably has a number average molecular weight of 500 to 3000000, and a molecular weight distribution of 1.5 to 15.

The diene rubber may be used singly, or as a mixture (blend) of two or more.

The diene rubber is preferably natural rubber, isoprene rubber, and rubber obtained by polymerization of monomers including 1,3-butadiene monomer. Examples of the rubber obtained by polymerization of monomers including 1,3-butadiene monomer include SBR, BR, NBR, and the like, with SBR and BR being preferable.

Among these, the diene rubber is preferably natural rubber, IR, SBR, BR, or a mixture of two or more of these rubbers. More preferably, the rubber component is natural rubber, SBR, BR, or a mixture of two or more of these rubbers. The blending ratio of these rubbers is preferably such that SBR, BR, or a mixture thereof is present in an amount of 70 to 100 parts by mass, and particularly preferably 75 to 100 parts by mass, per 100 parts by mass of the diene rubber-containing rubber component. When a mixture of SBR and BR is incorporated, the total amount of SBR and BR is preferably within the above-mentioned range. In this case, the amount of SBR is preferably in the range of 50 to 100 parts by mass, and the amount of BR is preferably in the range of 0 to 50 parts by mass.

The reaction product of the present invention contains a heteroatom, such as a nitrogen atom. This heteroatom interacts strongly with silica and carbon black; and thus enhances the dispersibility of silica or carbon black in a diene rubber component, thus imparting excellent low heat build-up to the reaction product while maintaining abrasion resistance.

Further, silica can be dispersed in the diene rubber-containing rubber component by the action of the tetrazine compound (1). The silica dispersion mechanism is presumed to be as follows.

Silica Dispersion Mechanism

The nitrogen atoms in the tetrazine compound (1) have high affinity to silica. The reaction product produced by a reaction of a diene rubber and the tetrazine compound (1) is presumed to have improved affinity to silica due to the presence of nitrogen atoms derived from the tetrazine compound. In particular, the introduction of a heteroatom-containing substituent or polar group to the 3-position ($X^1$ group) and the 6-position ($X^2$ group) of the tetrazine compound (1) is presumed to increase affinity to silica. The tetrazine compound (1) is thus considered to disperse silica in the diene rubber-containing rubber component.

Method for Producing the Reaction Product

The method for producing the reaction product of the present invention is not particularly limited. The reaction product of the present invention is produced, for example, using a rubber mixture of a diene rubber-containing rubber component and the tetrazine compound (1).

In this specification, the term "mixing" encompasses the meaning of "kneading."

Specific examples of the method for producing the reaction product of the present invention are as follows.

When the diene rubber-containing rubber component is a solid, for example, a method comprising mixing the rubber component and the tetrazine compound (1) (a solid mixing method) can be used. When the diene rubber-containing rubber component is in a liquid form (liquid), for example, a method comprising mixing a solution or emulsion (suspension) of the rubber component and the tetrazine compound (1) (a liquid mixing method) can be used.

The mixing temperature is not particularly limited. For example, when the solid mixing method is used, the upper limit of the temperature of the rubber mixture is preferably 80 to 190°C, more preferably 90 to 160°C, and still more preferably 100 to 150°C. When the liquid mixing method is used, the upper limit of the temperature of the liquid rubber mixture is 80 to 190°C, more preferably 90 to 160°C, and still more preferably 100 to 150°C.

The mixing time is not particularly limited. For example, when the solid mixing method is used, the mixing time is preferably 10 seconds to 20 minutes, more preferably 30 seconds to 10 minutes, and still more preferably 60 seconds to 7 minutes. When the liquid mixing method is used, the mixing time is preferably 10 seconds to 60 minutes, more preferably 30 seconds to 40 minutes, and still more preferably 60 seconds to 30 minutes. After the mixing reaction is performed by the liquid mixing method, for example, the solvent is evaporated (removed) from the mixture under reduced pressure, and a solid reaction product is collected.

In the production method of the reaction product of the present invention, 70 mass% or more of the diene rubber-containing rubber component is preferably at least one member selected from the group consisting of natural rubber, isoprene rubber, and rubber obtained by polymerization of monomers including 1,3-butadiene monomer. The diene rubber-containing rubber component can also contain rubber other than diene rubber. Examples of rubber other than diene rubber include non-diene rubbers, such as butyl rubber (IIR). The rubber component preferably contains a diene rubber in an amount of more preferably 80 mass% or more, and still more preferably 100 mass% or more. The amount of the tetrazine compound (1) is not particularly limited. For example, the amount of the tetrazine compound (1) used is suitably adjusted to be usually in an amount of 0.1 to 10 parts by mass, preferably 0.25 to 5 parts by mass, and more preferably 0.5 to 2 parts by mass, per 100 parts by mass of the diene rubber-containing rubber component.

In the production method of the reaction product of the present invention, carbon black, an inorganic filler, and other ingredients, etc., may be present together, in addition to the rubber component and the tetrazine compound (1).

## 3. Rubber Composition

The rubber composition of the present invention comprises the reaction product of the present invention, and an inorganic filler and/or carbon black.

The rubber composition of the present invention may further comprise rubber other than diene rubber. Examples of the rubber other than diene rubber include non-diene rubbers. As non-diene rubber, known rubber, such as butyl rubber (IIR), can be widely used.

When the rubber composition of the present invention comprises rubber other than diene rubber, the rubber other than diene rubber is present in an amount of preferably less than 30 parts by mass, and more preferably less than 20 parts by mass, per 100 parts by mass in total of a diene rubber that serves as a raw material of the reaction product and rubber other than the diene rubber. The case in which the rubber composition of the present invention comprises rubber other than the diene rubber refers to a case in which the diene rubber-containing rubber component used in the method for producing the reaction product contains rubber other than the diene rubber, or a case in which rubber other than the diene rubber is incorporated into the reaction product obtained by the production method described above.

The reaction product is as described above.

The amount of the inorganic filler and/or carbon black is not particularly limited. For example, the inorganic filler and/or carbon black is usually present in an amount of 2 to 200 parts by mass, preferably 30 to 130 parts by mass, and more preferably 35 to 110 parts by mass, per 100 parts by mass in total of the diene rubber and the rubber other than the diene rubber. When the inorganic filler and carbon black are both used, their amounts are appropriately adjusted so that the total amount of these components falls within the above-mentioned range.

Incorporating 2 parts by mass or more of an inorganic filler and/or carbon black is preferable from the viewpoint of improving the rubber composition reinforcement, whereas incorporating 200 parts by mass or less of an inorganic filler and/or carbon black is preferable from the viewpoint of reducing rolling resistance.

The inorganic filler or carbon black is usually used to enhance reinforcement of the rubber. In this specification, inorganic fillers do not include carbon black.

### Inorganic filler

The inorganic filler is not particularly limited as long as it is an inorganic compound usually used in the rubber industry. Examples of usable inorganic compounds include silica; aluminas ($Al_2O_3$) such as γ-alumina and α-alumina; alumina monohydrates ($Al_2O_3.H_2O$) such as boehmite and diaspore; aluminum hydroxides [Al $(OH)_{3]}$ such as gibbsite and bayerite; aluminum carbonate [$Al_2(CO_3)_3$], magnesium hydroxide [$Mg(OH)_{2]}$, magnesium oxide (MgO), magnesium

carbonate ($MgCO_3$), talc ($3MgO \cdot 4SiO_2 . H_2O$), attapulgite ($5MgO \cdot 8SiO_2 \cdot 9H_2O$), titanium white ($TiO_2$), titanium black ($TiO_{2n-1}$), calcium oxide (CaO), calcium hydroxide [$Ca(OH)_2$], magnesium aluminum oxide ($MgO \cdot Al_2O_3$), clay ($Al_2O_3 . 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminium silicates ($Al_2SiO_5$, $Al4 \cdot 3SiO_4 \cdot 5H_2O$, etc.), magnesium silicates ($Mg_2SiO_4$, $MgSiO_3$, etc.), calcium silicate ($Ca_2 \cdot SiO_4$, etc.), aluminum calcium silicates ($Al_2O_3 \cdot CaO \cdot 2SiO_2$, etc.), magnesium calcium silicate ($CaMgSiO_4$), calcium carbonate ($CaCO_3$), zirconium oxide ($ZrO_2$), zirconium hydroxide [$ZrO(OH)_2 \cdot nH_2O$], zirconium carbonate [$Zr(CO_3)_2$], zinc acrylate, zinc methacrylate, and crystalline aluminosilicates containing hydrogen, alkali metal, or alkaline earth metal that compensate charge, such as various types of zeolites. To enhance affinity to the rubber component, the surface of these inorganic fillers may be treated with an organic compound.

The amount of the inorganic filler is usually 10 to 200 parts by mass, per 100 parts by mass in total of the diene rubber and the rubber other than the diene rubber.

From the viewpoint of imparting rubber strength, silica is preferably used as the inorganic filler. Using silica alone or a combination of silica with one or more inorganic compounds usually used in the rubber industry is more preferable. When the inorganic filler is a combination of silica with one or more inorganic compounds other than silica, their amounts may be appropriately adjusted so that the total amount of the inorganic filler components falls within the above-mentioned range.

Adding silica is preferable because it can impart rubber strength. As silica, any type of commercially available products can be used. Among these, wet silica, dry silica, or colloidal silica is preferable, and wet silica is more preferable. To enhance affinity to the rubber component, the surface of silica may be treated with an organic compound.

The BET specific surface area of silica is not particularly limited and may be, for example, in the range of 40 to 350 $m^2/g$. Silica that has a BET specific surface area within this range is advantageous in that rubber reinforcement and dispersibility in the rubber component can both be achieved. The BET specific surface area is measured according to ISO 5794/1.

Silica preferable from this viewpoint is silica having a BET specific surface area of 80 to 300 $m^2/g$, more preferably silica having a BET specific surface area of 100 to 270 $m^2/g$, and particularly preferably silica having a BET specific surface area of 110 to 210 $m^2/g$.

Examples of commercially available products of such silica include products under the trade names of: "HD165MP" (BET specific surface area: 165 $m^2/g$), "HD115MP" (BET specific surface area: 115 $m^2/g$), "HD200MP" (BET specific surface area: 200 $m^2/g$), and "HD250MP" (BET specific surface area: 250 $m^2/g$), all produced by Quechen Silicon Chemical Co., Ltd.; "Nipsil AQ" (BET specific surface area: 205 $m^2/g$) and "Nipsil KQ" (BET specific surface area: 240 $m^2/g$), both produced by Tosoh Silica Corporation; "Ultrasil VN3" (BET specific surface area: 175 $m^2/g$) produced by Degussa AG; Z 1085 Gr (BET specific surface area: 90 $m^2/g$), Z Premium 200 MP (BET specific surface area: 215 $m^2/g$), and Z HRS 1200 MP (BET specific surface area: 200 $m^2/g$), all produced by Solvay; and the like.

The amount of silica is usually 20 to 120 parts by mass, preferably 30 to 100 parts by mass, and more preferably 40 to 90 parts by mass, per 100 parts by mass in total of the diene rubber and the rubber other than the diene rubber.

Although adding silica usually improves steering stability, adding a large amount of silica tends to deteriorate low heat build-up. However, when the additive of the present invention is used, excellent low heat build-up can be exhibited even when a large amount of silica is incorporated.

In particular, to achieve both steering stability and low fuel performance, the amount of silica is usually 40 to 120 parts by mass, preferably 60 to 115 parts by mass, and more preferably 70 to 110 parts by mass, per 100 parts by mass in total of the diene rubber and the rubber other than the diene rubber.

When the reaction product of the present invention is incorporated into a rubber composition containing an inorganic filler, in particular, silica, dispersibility of silica can be significantly improved, thus remarkably improving low heat build-up of the rubber composition while maintaining abrasion resistance.

Carbon black

The carbon black for use is not particularly limited. For example, commercially available carbon blacks, carbon-silica dual phase fillers, and the like can be used. Incorporating carbon black to a rubber component reduces electric resistance of rubber, thus providing an electric charge-suppressing effect and a rubber strength-enhancing effect.

Specific examples of carbon blacks include high, middle or low-structure SAF, ISAF, IISAF, N110, N134, N220, N234, N330, N339, N375, N550, HAF, FEF, GPF, or SRF-grade carbon black, and the like. Among these, SAF, ISAF, IISAF, N134, N234, N330, N339, N375, HAF, or FEF-grade carbon black is preferable.

There is no particular limitation on the DBP absorption of the carbon black. The carbon black preferably have a DBP absorption of 60 to 200 $cm^3/100$ g, more preferably 70 to 180 $cm^3/100$ g, and particularly preferably 80 to 160 $cm^3/100$ g.

The carbon black preferably has a nitrogen adsorption specific surface area (N2SA, measured according to JIS K6217-2: 2001) of 30 to 200 $m^2/g$, more preferably 40 to 180 $m^2/g$, and particularly preferably 50 to 160 $m^2/g$.

In the rubber composition containing carbon black, the reaction product of the diene rubber and the tetrazine compound (1) is believed to strongly interact with carbon black. Therefore, when the rubber composition of the present invention is used, dispersibility of carbon black, in particular, is increased significantly, and low heat build-up of the rubber composition can be significantly improved while maintaining abrasion resistance.

The amount of carbon black is usually 2 to 150 parts by mass, preferably 4 to 120 parts by mass, and more preferably 6 to 100 parts by mass, per 100 parts by mass in total of the diene rubber and the rubber other than the diene rubber.

Two parts by mass or more of carbon black is preferable in terms of securing antistatic performance and rubber strength performance, whereas 150 parts by mass or less of carbon black is preferable in terms of reducing rolling resistance.

Other Ingredients

In addition to the reaction product, the inorganic filler and/or carbon black, and optionally rubber other than the diene rubber, the rubber composition of the present invention may comprise ingredients usually used in the rubber industry, such as vulcanizing agents including sulfur. The rubber composition of the present invention may further comprise other ingredients, such as antioxidants, ozone protectants, softeners, processing aids, waxes, resins, foaming agents, oils, stearic acid, zinc oxide (ZnO), vulcanization accelerators, and vulcanization retarders. These ingredients may be incorporated as long as they do not impair the object of the present invention. As such ingredients, commercially available products can be suitably used.

Further, a silane coupling agent may be incorporated in the rubber composition of the present invention comprising an inorganic filler, such as silica, for the purpose of enhancing the rubber composition reinforcement by silica, or enhancing abrasion resistance and low heat build-up of the rubber composition.

The silane coupling agent that can be used with an inorganic filler is not particularly limited, and commercially available products can be preferably used. Examples of such silane coupling agents include sulfide, polysulfide, thioester, thiol, olefin, epoxy, amino, or alkyl silane coupling agents.

Examples of sulfide silane coupling agents include bis(3-triethoxysilylpropyl)tetrasulfide, bis(3-trimethoxysilylpropyl)tetrasulfide, bis(3-methyldimethoxysilylpropyl)tetrasulfide, bis(2-triethoxysilylethyl)tetrasulfide, bis(3-triethoxysilylpropyl)disulfide, bis(3-trimethoxysilylpropyl)disulfide, bis(3-methyldimethoxysilylpropyl)disulfide, bis(2-triethoxysilylethyl)disulfide, bis(3-triethoxysilylpropyl)trisulfide, bis(3-trimethoxysilylpropyl)trisulfide, bis(3-methyldimethoxysilylpropyl)trisulfide, bis(2-triethoxysilylethyl)trisulfide, bis(3-monoethoxydimethylsilylpropyl)tetrasulfide, bis(3-monoethoxydimethylsilylpropyl)trisulfide, bis(3-monoethoxydimethylsilylpropyl)disulfide, bis(3-monomethoxydimethylsilylpropyl)tetrasulfide, bis(3-monomethoxydimethylsilylpropyl)trisulfide, bis(3-monomethoxydimethylsilylpropyl)disulfide, bis(2-monoethoxydimethylsilylethyl)tetrasulfide, bis(2-monoethoxydimethylsilylethyl)trisulfide, bis(2-monoethoxydimethylsilylethyl)disulfide, and the like. Among these, bis(3-triethoxysilylpropyl)tetrasulfide is particularly preferable.

Examples of thioester silane coupling agents include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, 2-lauroylthioethyltrimethoxysilane, and the like.

Examples of thiol silane coupling agents include 3-mercaptopropyltrimethoxysilane, 3-mercaptopropyltriethoxysilane, 3-mercaptopropylmethyldimethoxysilane, 3-[ethoxybis(3,6,9,12,15-pentaoxaoctacosan-1-yloxy)silyl]-1-propanethiol, and the like.

Examples of olefin silane coupling agents include dimethoxymethylvinylsilane, vinyltrimethoxysilane, dimethylethoxyvinylsilane, diethoxymethylvinylsilane, triethoxyvinylsilane, vinyltris(2-methoxyethoxy)silane, allyltrimethoxysilane, allyltriethoxysilane, p-styryltrimethoxysilane, 3-(dimethoxymethylsilyl)propyl acrylate, 3-(trimethoxysilyl)propyl acrylate, 3-[dimethoxy(methyl)silyl]propyl methacrylate, 3-(trimethoxysilyl)propyl methacrylate, 3-[dimethoxy(methyl)silyl]propyl methacrylate, 3-(triethoxysilyl)propyl methacrylate, 3-[tris(trimethylsiloxy)silyl]propyl methacrylate, and the like.

Examples of epoxy silane coupling agents include 3-glycidyloxypropyl(dimethoxy)methylsilane, 3-glycidyloxypropyltrimethoxysilane, diethoxy(3-glycidyloxypropyl)methylsilane, triethoxy(3-glycidyloxypropyl)silane, 2-(3,4-epoxycyclohexyl)ethyltrimethoxysilane, and the like. Among these, 3-glycidyloxypropyltrimethoxysilane is preferable.

Examples of amino silane coupling agents include N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-ethoxysilyl-N-(1,3-dimethylbutylidene)propylamine, N-phenyl-3-aminopropyltrimethoxysilane, N-(vinylbenzyl)-2-aminoethyl-3-aminopropyltrimethoxysilane, and the like. Among these, 3-aminopropyltriethoxysilane is preferable.

Examples of alkyl silane coupling agents include methyltrimethoxysilane, dimethyldimethoxysilane, trimethylmethoxysilane, methyltriethoxysilane, ethyltrimethoxysilane, n-propyltrimethoxysilane, isobutyltrimethoxysilane, isobutyltriethoxysilane, n-hexyltrimethoxysilane, n-hexyltriethoxysilane, cyclohexylmethyldimethoxysilane, n-octyltriethoxysilane, n-decyltrimethoxysilane, and the like. Among these, methyltriethoxysilane is preferable.

Among these silane coupling agents, bis(3-triethoxysilylpropyl)tetrasulfide, bis(3-triethoxysilylpropyl)disulfide, and 3-[ethoxybis(3,6,9,12,15-pentaoxaoctacosan-1-yloxy)silyl]-1-propanethiol can be particularly preferably used.

In the present invention, silane coupling agents can be used singly, or in a combination of two or more.

The amount of silane coupling agent in the rubber composition of the present invention is preferably 0.1 to 20 parts by mass, and particularly preferably 3 to 15 parts by mass, per 100 parts by mass of the inorganic filler. This is because 0.1 parts by mass or more of a silane coupling agent can more advantageously improve low heat build-up of the rubber composition, whereas 20 parts by mass or less of a silane coupling agent can reduce the cost of the rubber composition and increase economic efficiency.

Use of Rubber Composition

The use of the rubber composition of the present invention is not particularly limited. For example, the rubber composition can be used for tires, vibration-proof rubbers, conveyor belts, seismic isolation rubber, rubber parts of these components, and the like. Among these, one preferred application is tires.

Method for Producing the Rubber Composition

The method for producing the rubber composition of the present invention is not particularly limited. The method for producing the rubber composition of the present invention comprises, for example, the steps of: (A) mixing raw material ingredients, including a diene rubber, the tetrazine compound (1), and an inorganic filler and/or carbon black; and (B) mixing the mixture comprising the reaction product obtained in step (A) with a vulcanizing agent.

Step (A)

Step (A) is a step of mixing raw material ingredients, including a diene rubber, the tetrazine compound (1), and an inorganic filler and/or carbon black. It refers to the step before incorporating a vulcanizing agent. Step (A) also serves as a step of producing a reaction product of a diene rubber and the tetrazine compound (1).

In step (A), other ingredients as mentioned above etc. can also be incorporated, if necessary.

The mixing method in step (A) may be, for example, a method of mixing raw material ingredients, including a diene rubber, the tetrazine compound (1), and an inorganic filler and/or carbon black. In this mixing method, the entire amount of each ingredient may be mixed at once; or each ingredient may be added in portions according to the intended purpose, such as viscosity adjustment, and mixed. Alternatively, after mixing raw material ingredients, including a diene rubber and an inorganic filler and/or carbon black, the tetrazine compound (1) may be added and mixed. To uniformly disperse each ingredient, the mixing operation may be performed repeatedly.

In step (A), rubber other than the diene rubber can optionally be incorporated.

The temperature of mixing the raw material ingredients in step (A) is not particularly limited. For example, the temperature of raw material ingredients is preferably 60 to 190°C, more preferably 80 to 175°C, and still more preferably 100 to 170°C.

The mixing time in step (A) is not particularly limited. For example, the mixing time is preferably 10 seconds to 20 minutes, more preferably 30 seconds to 10 minutes, and more preferably 2 to 7 minutes.

Another example of the mixing method in step (A) is a two-step mixing method comprising the step of (A-1) mixing a diene rubber with the tetrazine compound (1) to produce a reaction product; and (A-2) mixing the reaction product obtained in step (A-1) with raw material ingredients, including an inorganic filler and/or carbon black.

Step (A-1)

Step (A-1) is a step of mixing a diene rubber with the tetrazine compound (1) to produce a reaction product.

In step (A-1), rubber other than the diene rubber can optionally be incorporated.

The entire amount of each ingredient may be mixed at once; or each ingredient may be added in portions according to the intended purpose, such as viscosity adjustment, and mixed. It is preferable that the rubber other than the diene rubber, when incorporated, be added simultaneously with the diene rubber.

The temperature of mixing a diene rubber and the tetrazine compound (1) in step (A-1) is preferably 80 to 190°C, more preferably 90 to 160°C, and still more preferably 100 to 150°C. This is because a mixing temperature of lower than 80°C does not allow the reaction to proceed, whereas a mixing temperature of 190°C or more accelerates deterioration of the rubber.

The mixing time in step (A-1) is preferably 10 seconds to 20 minutes, more preferably 30 seconds to 10 minutes,

and still more preferably 60 seconds to 7 minutes. When the mixing time is shorter than 10 seconds, the reaction does not proceed sufficiently, whereas a mixing time of 20 minutes or more lowers the productivity.

In step (A-1), the amount of the tetrazine compound (1) is not particularly limited. For example, the amount of the tetrazine compound (1) is 0.1 to 10 parts by mass, preferably 0.25 to 5 parts by mass, and more preferably 0.5 to 2 parts by mass, per 100 parts by mass of the diene rubber (if rubber other than the diene rubber is incorporated, then the total amount of the rubbers).

Step (A-2)

Step (A-2) is a step of mixing the reaction product obtained in step (A-1), optionally rubber other than the diene rubber, and an inorganic filler and/or carbon black.

In step (A-2), other ingredients as mentioned above etc. can also be mixed, if necessary. To uniformly disperse each ingredient, the mixing operation may be performed repeatedly.

The temperature of mixing the reaction product obtained in step (A-1) and an inorganic filler and/or carbon black in step (A-2) is not particularly limited. For example, the upper limit of the temperature of the mixture is preferably 120 to 190°C, more preferably 130 to 175°C, and still more preferably 140 to 170°C.

The mixing time in step (A-2) is not particularly limited. For example, the mixing time is preferably 10 seconds to 20 minutes, more preferably 30 seconds to 10 minutes, and still more preferably 2 to 7 minutes.

In step (A-1), the double bond portion of diene rubber reacts with the tetrazine compound (1) to form a reaction product having six-membered structures represented by formulas (2) to (12); and in step (A-2), a mixture in which an inorganic filler and/or carbon black is preferably dispersed is obtained.

Step (B)

Step (B) is a step of mixing the mixture obtained in step (A-2) and one or more vulcanizing agents. Step (B) refers to a final stage of mixing.

In step (B), a vulcanization accelerator etc. can also be added, if necessary.

Step (B) can be performed under heating conditions. The heating temperature in step (B) is not particularly limited. The temperature is preferably, for example, 60 to 140°C, more preferably 80 to 120°C, and still more preferably 90 to 120°C.

The mixing time is not particularly limited. For example, the mixing time is preferably 10 seconds to 20 minutes, more preferably 30 seconds to 10 minutes, and still more preferably 60 seconds to 5 minutes.

When the production process proceeds from step (A-2) to (B), it is preferable for the process to proceed to the subsequent step (B) after the temperature is reduced by 30°C or more from the temperature after completion of the antecedent step.

In the method for producing the rubber composition of the present invention, various ingredients usually incorporated in the rubber composition, for example, stearic acid, vulcanization accelerators such as zinc oxide, and antioxidants, may be added in step (A-2) or (B), if necessary.

The rubber composition of the present invention may be mixed or kneaded using a Banbury mixer, a roll, an intensive mixer, a kneader, a twin-screw extruder, or the like. In an extrusion step, the resulting mixture is then extruded and processed to form, for example, a tread member or a sidewall member. Subsequently, the member is attached and molded in a usual manner using a tire molding machine to form a green tire. The green tire is heated under pressure in a vulcanizing machine to obtain a tire.

4. Tire

The tire of the present invention is produced using the rubber composition of the present invention.

Examples of the tire of the present invention include pneumatic tires (such as radial-ply tires and bias tires), solid tires, and the like.

The use of the tire is not particularly limited. Examples include passenger car tires, heavy-duty tires, motorcycle tires, studless tires, and the like. Among these, the tire of the present invention is preferably used as passenger car tires.

The shape, structure, size, and material of the tire of the present invention are not particularly limited, and can be appropriately selected according to the purpose.

In the tire of the present invention, the above additive, rubber composition, or modified polymer are used for at least one member particularly selected from tread, sidewall, bead area, belt, carcass, and shoulder portions.

Among these, according to one preferable embodiment, a tire tread or sidewall part of a pneumatic tire is formed using the rubber composition.

The "tread" is a portion that has a tread pattern and comes into direct contact with the road surface. The tread

is a tire casing portion for protecting the carcass, and preventing wear and flaws. The thread refers to a cap tread that constitutes the grounding part of a tire and/or to a base tread that is disposed inside the cap tread.

The "sidewall" refers to, for example, a portion from the lower side of a shoulder portion to a bead portion of a pneumatic radial-ply tire. Sidewall portions protect the carcass and are bent the most when the vehicle runs.

The "bead area" portions function to anchor both ends of carcass cords and simultaneously hold a tire to a rim. Beads are composed of bundles of high carbon steel.

The "belt" refers to a reinforcing band disposed between the carcass and the tread of a radial structure in the circumferential direction. The belt tightens the carcass like a hoop of a barrel to enhance the rigidity of the tread.

The "carcass" refers to a cord layer portion that forms the framework of a tire. The carcass plays a role in bearing the load, impact, and filled air pressure applied to the tire.

The "shoulder" refers to a shoulder portion of a tire. Shoulder portions play a role in protecting the carcass.

The tire of the present invention can be produced by methods known in the field of tires. The tire may be filled with ordinary air, or air having an adjusted oxygen partial pressure; or an inert gas, such as nitrogen, argon, or helium.

The tire of the present invention has low heat build-up and reduced rolling resistance, thus achieving lower fuel consumption of automobiles.

## Examples

The present invention is described below more specifically with reference to Production Examples and Examples. However, the following examples are only illustrative, and are not intended to limit the present invention thereto.

### Production Example 1: Production of 3,6-bis(3-pyridyl)-1,2,4,5-tetrazine (1b)

24 g (0.23 mol) of 3-cyanopyridine, 15 g (1.3 equivalents) of hydrazine hydrate, and 48 mL of methanol were placed in a 200-mL four-necked flask, and stirred at room temperature. Subsequently, 3.6 g (15 wt.%) of sulfur was added to this mixture. The flask was equipped with a condenser and the mixture was stirred overnight while heating at an outside temperature of 70°C. The reaction mixture was cooled with ice, and crystals were filtered and washed with a small amount of cold methanol. Crude crystals were dried under reduced pressure to obtain 19 g of orange dihydrotetrazine crude crystals.

17.8 g of the obtained crude crystals were dissolved in 178 g (40 equivalents) of acetic acid, and sulfur was removed by filtration. The resulting solution of dihydrotetrazine in acetic acid and 178 mL of distilled water were placed in a 1-L four-necked recovery flask, and the mixture was stirred under icecooling. A solution of 15.5 g (3 equivalents) of sodium nitrite in 35 mL of distilled water was prepared and added dropwise to the reaction mixture over a period of about 1 hour. The resulting mixture was stirred overnight at room temperature. The precipitated crystals were filtered and neutralized with a 10% aqueous sodium bicarbonate solution to obtain crude crystals. The crude crystals were purified through a silica gel column (ethyl acetate) to obtain 8.4 g of the titled tetrazine compound (compound (1b)) (red-purple, acicular crystals).

Melting point: 200°C,

$^1$H-NMR (300 MHz, $CDCl_3$, $\delta$ ppm):

7.59 (ddd, J = 0.9, 5.1, 7.8 Hz, 2 H), 8.89-8.96 (m, 4 H), 9.88 (dd, J = 0.9, 2.4 Hz, 2 H)

### Example 1

Solution-polymerized SBR (trade name Tufdene 3835, produced by Asahi Kasei Chemicals Corporation) (100 parts by mass) and 3,6-bis(2-pyridyl)-1,2,4,5-tetrazine (Compound (1b), produced by Tokyo Chemical Industry Co., Ltd.) (5 parts by mass) were mixed using a Banbury mixer. When the temperature of the mixture reached 130 to 150°C, the mixture was mixed for about 2 minutes while adjusting the temperature to maintain the temperature. The resulting mixture was then cooled on a roll mill to produce a reaction product.

Although the mixture had a clear red to purple color at the beginning of the mixing, the color disappeared as the mixing proceeded.

The tetrazine compound (1b), solution-polymerized SBR (S-SBR), and the obtained reaction product were extracted with THF, the residue (modified S-SBR) obtained after concentration of the organic layer was dissolved in $CDCl_3$, and the $^{13}$C-NMR was measured. Fig. 1 shows the measurement results of the tetrazine compound (1b), Figs. 2 and 3 show the measurement results of S-SBR, and Figs. 4 and 5 show the measurement results of the modified S-SBR. Fig. 6 shows $^{13}$C-NMR charts of the tetrazine compound (1b), the S-SBR, and the modified S-SBR, for comparison. Figs. 1 to 6 demonstrate that the spectrum of the reaction product was clearly different from those of the SBR or tetrazine compound.

Examples 2 to 5

The components shown in Table 1 below were mixed in the proportions (parts by mass) shown in the table and mixed using a Banbury mixer for 5 minutes, while adjusting the number of rotations so that the maximum temperature of the mixture was 150°C, thereby obtaining the target reaction product.

Examples 6 to 9

The components shown in step (A-1) of Table 2 below were mixed in the proportions (parts by mass) shown in the table using the reaction product produced in Examples 2 to 5; and mixed using a Banbury mixer for 5 minutes, while adjusting the number of rotations so that the maximum temperature of the mixture was 160°C. After the obtained mixture was allowed to rest until the temperature was lowered to 80°C or less, the components shown in step (B) of Table 2 were added in the proportions (parts by mass) shown in the table to the mixture and mixed while adjusting the temperature so that the maximum temperature of the mixture did not exceed 110°C. Each rubber composition was thus obtained.

Examples 10 to 16 and Comparative Examples 1 to 3

The components shown in step (A) of Tables 1 and 2 below were mixed in the proportions (parts by mass) shown in the tables and mixed using a Banbury mixer for 5 minutes, while adjusting the number of rotations so that the maximum temperature of the mixture was 160°C. After the obtained mixture was allowed to rest until the temperature was lowered to 80°C or less, the components shown in step (B) of Tables 1 to 2 were added in the proportions (parts by mass) shown in the tables to the mixture and mixed while adjusting the temperature so that the maximum temperature of the mixture did not exceed 110°C. Each rubber composition was thus obtained. In the above operation, the diene rubber and the tetrazine compound (1) were reacted to produce a reaction product, and each of the obtained rubber compositions comprised the reaction product.

Low Heat Build-up (tan δ Index) Test

The tan δ of the rubber compositions produced in Examples 6 to 16 and Comparative Examples 1 to 3 (test compositions), as well as rubber compositions that contained no tetrazine compound (1) as a reference (reference compositions), was measured using a viscoelasticity measuring instrument (produced by Metravib) at a temperature of 50°C, a dynamic strain of 5%, and a frequency of 15 Hz. The low heat build-up index was calculated according to the following formula.

A higher low heat build-up index indicates a lower heat build-up and a smaller hysteresis loss.

Tables 2 to 4 show the results.

Formula: Low heat build-up index = {(tan δ of the reference composition)/(tan δ of the test composition)} × 100

Dispersibility Test

The viscoelasticity of the rubber compositions produced in Examples 10 to 16 and Comparative Examples 1 to 3 (test compositions), as well as rubber compositions that contained no tetrazine compound (1) as a reference (reference compositions), was measured using a viscoelasticity measuring device (Metravib) at a temperature of 25°C, a shear distortion of 0 to 100%, and a frequency of 10 Hz.

The Payne effect at this time, as well as the Payne effect index, was calculated according to the following formula to use the resulting value as an index of dispersibility.

A greater value indicates better dispersibility of the filler.

Tables 3 and 4 show the results.

Formula: Payne effect = (maximum complex elastic modulus - minimum complex elastic modulus)/(minimum complex elastic modulus)

Payne effect index = {(Payne effect of the reference composition)/(Payne effect of the test composition)} × 100

Abrasion Resistance Test

The rubber compositions produced in Examples 10 to 16 and Comparative Examples 1 to 3 (test compositions), as well as rubber compositions that contained no tetrazine compound (1) as a reference (reference compositions), were subjected to a Lambourn abrasion test (JIS K 6264) at room temperature at a slip rate of 24%. The abrasion resistance index was calculated according to the following formula.

Tables 3 and 4 show the results.

Formula: Abrasion resistance index = {(abrasion loss of the test composition)/(abrasion loss of the reference composition)} × 100

Reactivity Test

Rubber components in which 10 parts by mass of Compound (1b) produced in Production Example 1 was added at 60°C or lower to 100 parts by mass of the rubber components of Examples 17 to 20 and Comparative Examples 4 and 5 shown in Table 5 and mixed, as well as the rubber component of Comparative Example 6, were used as test rubber components. The heat of reaction from 60°C to 210°C was then determined by DSC (measured at a temperature elevation rate of 10 K/min from 20°C to 250°C; see aluminum pan for reference). The reactivity index was calculated according to the following formula using the rubber component of Example 18 as a reference.

Table 5 shows the results.

Formula: Reactivity index = {(heat of reaction of the test rubber component)/(heat of reaction of the rubber component of Example 18)} × 100

Table 1

| | | Example | | | |
|---|---|---|---|---|---|
| | | 2 | 3 | 4 | 5 |
| Formulation | S-SBR*1 | 110 | 110 | 110 | |
| | BR*2 | 20 | | 20 | 100 |
| | Compound (a)*3 | 1 | | | 2 |
| | Compound (b)*4 | | 1 | | |
| | Compound (c)*5 | | | 1 | |

Table 2

| | | | Example | | | |
|---|---|---|---|---|---|---|
| | | | 6 | 7 | 8 | 9 |
| Components of the rubber composition | Step (A-2) | Modified S-SBR/BR*6 | 130 | | | |
| | | Modified S-SBR*7 | | 110 | | |
| | | Modified S-SBR/BR*8 | | | 130 | |
| | | Modified BR*9 | | | | 60 |
| | | BR*2 | | 20 | | |
| | | NR*10 | | | | 40 |
| | | Silica*11 | 80 | 80 | 80 | |
| | | Silane coupling agent*12 | 6.4 | 6.4 | 6.4 | |
| | | Carbon black*13 | 4 | 4 | 4 | 50 |
| | | Antioxidant*14 | 2 | 2 | 2 | 2 |
| | | Zinc oxide*15 | 2 | 2 | 2 | 4 |
| | | Stearic acid*16 | 2 | 2 | 2 | 2 |
| | | Wax*17 | 1.5 | 1.5 | 1.5 | 1.5 |
| | | Process oil*18 | 7.5 | 7.5 | 7.5 | |
| | Step (B) | Sulfur*19 | 1 | 1 | 1 | 1.4 |
| | | Vulcanization accelerator*20 | 1.2 | 1.2 | 1.2 | |
| | | Vulcanization accelerator*21 | 2 | 2 | 2 | |
| | | Vulcanization accelerator*22 | | | | 1 |
| Low heat build-up index | | | 139 | 150 | 145 | 119 |

Table 3

| | | | Example | | | | Comparative Example | | |
|---|---|---|---|---|---|---|---|---|---|
| | | | 10 | 11 | 12 | 13 | 1 | 2 | 3 |
| Components of the rubber composition | Step (A) | IIR*23 | 20 | | | | 100 | 40 | |
| | | SBR*1 | 80 | 100 | 70 | | | 60 | 100 |
| | | BR*2 | | | 30 | 30 | | | |
| | | NR*25 | | | | 70 | | | |
| | | Silica*11 | 55 | 55 | 55 | 20 | 55 | 55 | 55 |
| | | Silane coupling agent*12 | 4.4 | 4.4 | 4.4 | 1.8 | 4.4 | 4.4 | 4.4 |
| | | Carbon black*27 | 10 | 10 | 10 | 45 | 10 | 10 | 10 |
| | | Processing aid*28 | 3 | 3 | 3 | 3 | 3 | 3 | 3 |
| | | Antioxidant*30 | 3 | 3 | 3 | 3 | 3 | 3 | 3 |
| | | Zinc oxide*31 | 2 | 2 | 2 | 2 | 2 | 2 | 2 |
| | | Stearic acid*16 | 2 | 2 | 2 | 2 | 2 | 2 | 2 |
| | | Compound (1b)*3 | 1 | 1 | 1 | 1 | 1 | 1 | |

(continued)

| | | | Example | | | | Comparative Example | | |
|---|---|---|---|---|---|---|---|---|---|
| | | | 10 | 11 | 12 | 13 | 1 | 2 | 3 |
| | Step (B) | Sulfur*19 | 1 | 1 | 1 | 1 | 1 | 1 | 1 |
| | | Vulcanization accelerator*20 | 1.2 | 1.2 | | | 1.2 | 1.2 | 1.2 |
| | | Vulcanization accelerator*21 | 2 | 2 | 2 | 2 | 2 | 2 | 2 |
| | | Vulcanization retarder*33 | | | | 0.1 | | | |
| Payne effect index | | | 125 | 157 | 148 | 111 | 97 | 107 | 100 |
| Abrasion resistance index | | | 103 | 104 | 105 | 103 | 98 | 101 | 100 |
| Low heat build-up index | | | 121 | 136 | 143 | 122 | 95 | 107 | 100 |

Table 4

| | | | Example | | |
|---|---|---|---|---|---|
| | | | 14 | 15 | 16 |
| Components of the rubber composition | Step (A) | SBR*24 | 70 | 70 | 70 |
| | | BR*2 | 30 | 30 | 30 |
| | | Silica*26 | 70 | 70 | 70 |
| | | Silane coupling agent*12 | 6.4 | 6.4 | 6.4 |
| | | Carbon black*27 | 15 | 15 | 15 |
| | | Processing aid*28 | 3 | 3 | 3 |
| | | Resin*29 | 5 | 5 | 5 |
| | | Antioxidant*30 | 5 | 5 | 5 |
| | | Zinc oxide*31 | 2 | 2 | 2 |
| | | Stearic acid*16 | 2 | 2 | 2 |
| | | Oil*32 | 37.5 | 37.5 | 37.5 |
| | | Compound (1a)*3 | 1 | | |
| | | Compound (1b)*4 | | 1 | |
| | | Compound (1c)*5 | | | 1 |
| | Step (B) | Sulfur*19 | 1 | 1 | 1 |
| | | Vulcanization accelerator*20 | 1.2 | 1.2 | 1.2 |
| | | Vulcanization accelerator*21 | 2 | 2 | 2 |
| Payne effect index | | | 157 | 167 | 148 |
| Abrasion resistance index | | | 104 | 103 | 103 |
| Low heat build-up index | | | 145 | 154 | 143 |

Table 5

| | Example | | | | Comparative Example | |
|---|---|---|---|---|---|---|
| | 17 | 18 | 19 | 20 | 4 | 5 |
| IIR*23 | 20 | | | | 100 | 40 |
| SBR*1 | 80 | 100 | 70 | | | 60 |
| BR*2 | | | 30 | 30 | | |
| NR*25 | | | | 70 | | |
| Reactivity index | 75 | 100 | 103 | 85 | 3 or less | 45 |

Description of Reference Numerals in Tables

*1: produced by Asahi Chemical Industry Co., Ltd., trade name Tufdene 2000R
*2: produced by Ube Industries Ltd., trade name BR 150B
*3: 3,6-bis(2-pyridyl)-1,2,4,5-tetrazine, produced by Tokyo Chemical Industry Co., Ltd.
*4: 3,6-bis(3-pyridyl)-1,2,4,5-tetrazine (compound produced by Production Example 1)
*5: 3,6-bis(4-pyridyl)-1,2,4,5-tetrazine, produced by Tokyo Chemical Industry Co., Ltd.
*6: modified S-SBR/BR produced in Example 2
*7: modified S-SBR produced in Example 3
*8: modified S-SBR/BR produced in Example 4
*9: modified BR produced in Example 5
*10: produced by Guangken Rubber, trade name TSR20
*11: produced by Tosoh Silica Corporation, trade name Nipsil (grade AQ)
*12: produced by Evonik Industries AG, trade name Si69
*13: produced by Cabot, trade name N234
*14: produced by Kemai Chemical Co., Ltd., trade name 6-PPD
*15: produced by Dalian Zinc Oxide Co., Ltd.
*16: produced by Sichuan Tianyu Grease Chemical Co., Ltd.
*17: produced by Rhein Chemie Rheinau GmbH, trade name Antilux 111
*18: produced by Hansen & Rosenthal, trade name Vivatec 700
*19: produced by Hosoi Chemical Industry Co., Ltd., trade name HK200-5
*20: produced by Ouchi Shinko Chemical Industrial Co., Ltd., trade name Nocceler D
*21: produced by Ouchi Shinko Chemical Industrial Co., Ltd., trade name Nocceler CZ-G
*22: produced by Kemai Chemical Co., Ltd., trade name TBBS
*23: produced by Japan Butyl Co., Ltd., trade name Butyl 268
*24: produced by Zeon Corporation, trade name NS116R
*25: produced by Sinochem International Corp., trade name RSS #3
*26: produced by Evonik Industries AG, trade name Ultrasil 7000 GR
*27: produced by Tokai Carbon Co., Ltd., trade name Seast 3
*28: produced by Struktol, trade name HT254
*29: produced by Yasuhara Chemical Co., Ltd., trade name YS Resin TO115
*30: produced by Kawaguchi Chemical Industry Co., Ltd., trade name Antage 6C
*31: produced by Sakai Chemical Industry Co., Ltd., zinc oxide, grade No. 1
*32: produced by JXTG Nippon Oil & Energy Corporation, trade name X-140 (aroma oil)
*33: produced by Ouchi Shinko Chemical Industrial Co., Ltd., trade name Retarder CPT

## Claims

**1.** A reaction product of a diene rubber with a tetrazine compound represented by Formula (1) or a salt thereof:

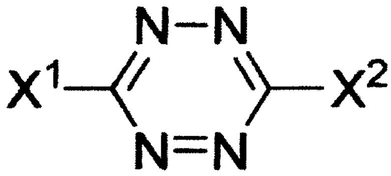

(1)

wherein $X^1$ and $X^2$ are identical or different and each represent a hydrogen atom, or an alkyl, alkylthio, aralkyl, aryl, arylthio, heterocyclic, or amino group; each of these groups may have one or more substituents.

**2.** The reaction product according to claim 1, wherein the tetrazine compound is represented by Formula (1) in which $X^1$ and $X^2$ represent a heterocyclic group.

**3.** The reaction product according to claim 1 or 2, wherein the diene rubber is at least one member selected from the group consisting of natural rubber, isoprene rubber, and rubber obtained by polymerization of monomers including 1,3-butadiene monomer.

**4.** A rubber composition comprising the reaction product of any one of claims 1 to 3 and an inorganic filler and/or carbon black.

**5.** A rubber composition comprising the reaction product of any one of claims 1 to 3 produced using the diene rubber, the tetrazine compound represented by Formula (1) or a salt thereof, and an inorganic filler and/or carbon black.

**6.** The rubber composition according to claim 4 or 5, further comprising rubber other than the diene rubber.

**7.** The rubber composition according to claim 6, wherein the diene rubber is present in an amount of 70 parts by mass or more, per 100 parts by mass in total of the diene rubber and the rubber other than the diene rubber.

**8.** The rubber composition according to any one of claims 4 to 7, wherein the inorganic filler is silica.

**9.** The rubber composition according to claim 8, wherein the silica is present in an amount of 20 to 120 parts by mass, per 100 parts by mass of the reaction product of any one of claims 1 to 3.

**10.** The rubber composition according to claim 8 or 9, wherein the silica is wet silica.

**11.** A tire tread produced using the rubber composition of any one of claims 4 to 10.

**12.** A tire sidewall produced using the rubber composition of any one of claims 4 to 10.

**13.** A pneumatic tire comprising the tire tread of claim 11 or the tire sidewall of claim 12.

Fig. 1

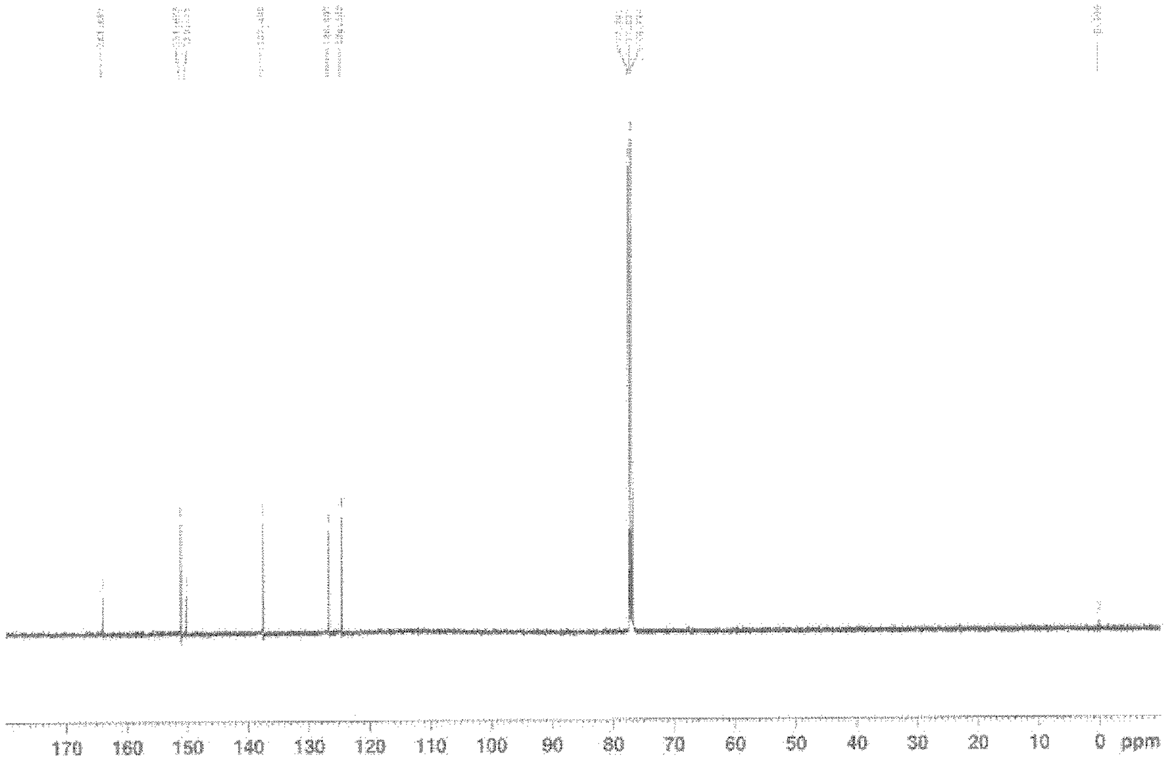

Fig. 2

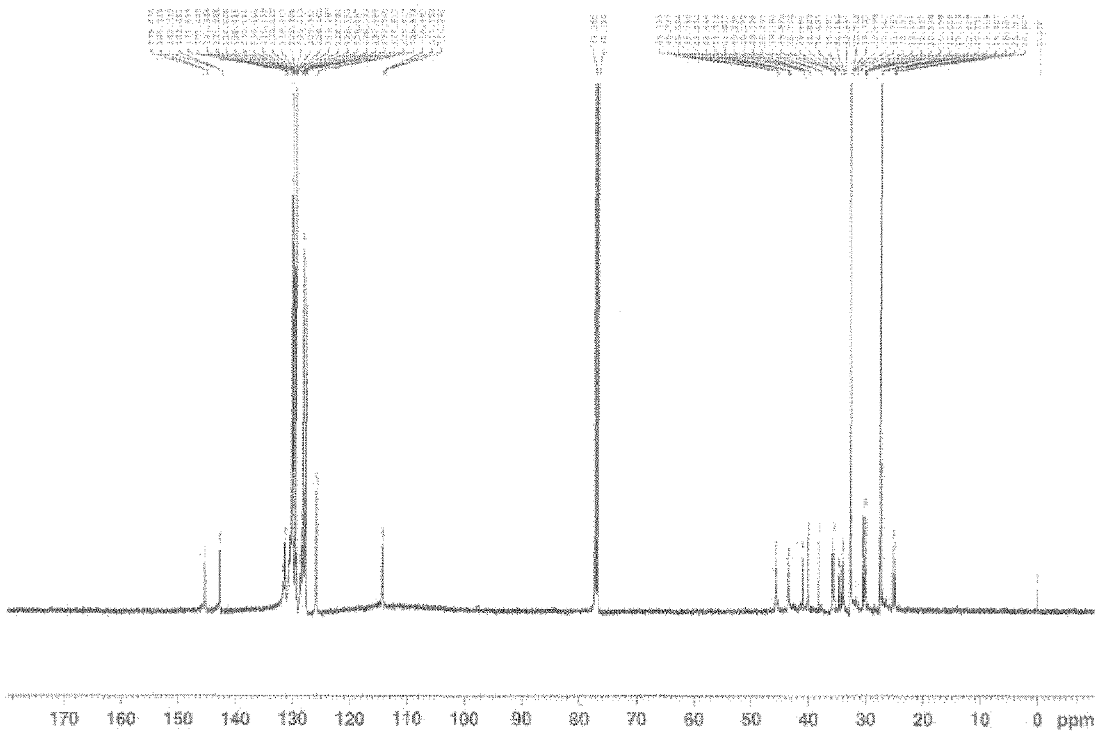

Fig. 3

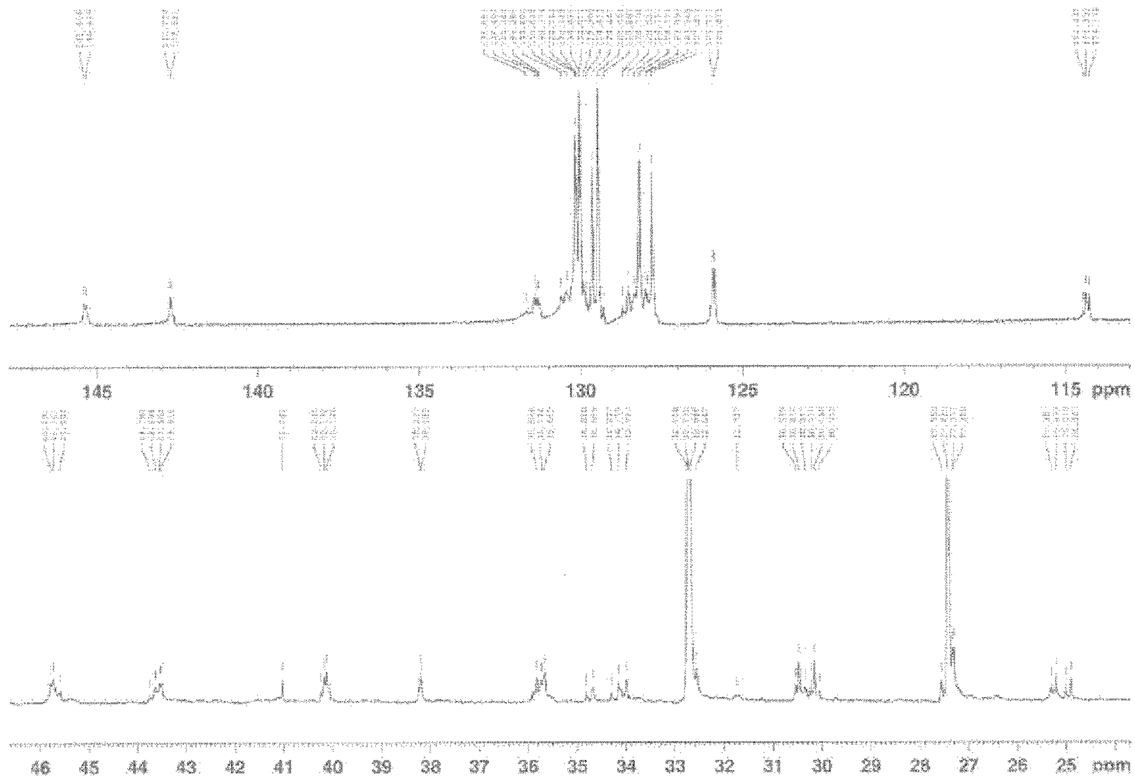
145
140
135
130
125
120
115 ppm
46
45
44
43
42
41
40
39
38
37
36
35
34
33
32
31
30
29
28
27
26
25 ppm

Fig. 4

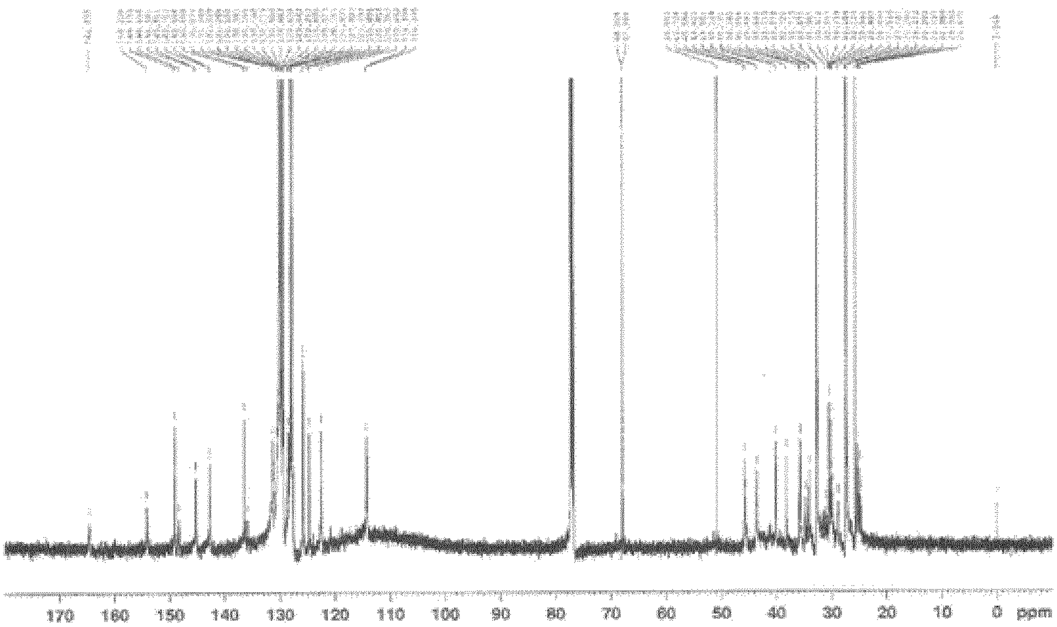


*The peaks at 68 ppm and 51 ppm are attributed to THF used for extraction.

Fig. 5

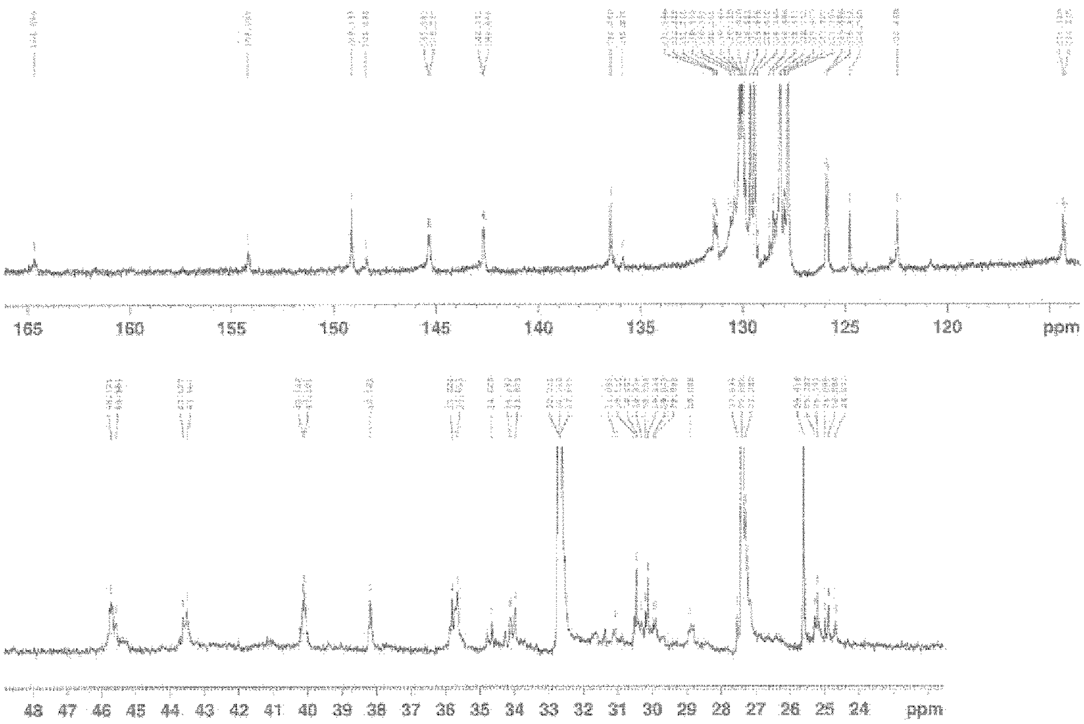
165
160
155
150
145
140
135
130
125
120
ppm
48
47
46
45
44
43
42
41
40
39
38
37
36
35
34
33
32
31
30
29
28
27
26
25
24
ppm

Fig. 6

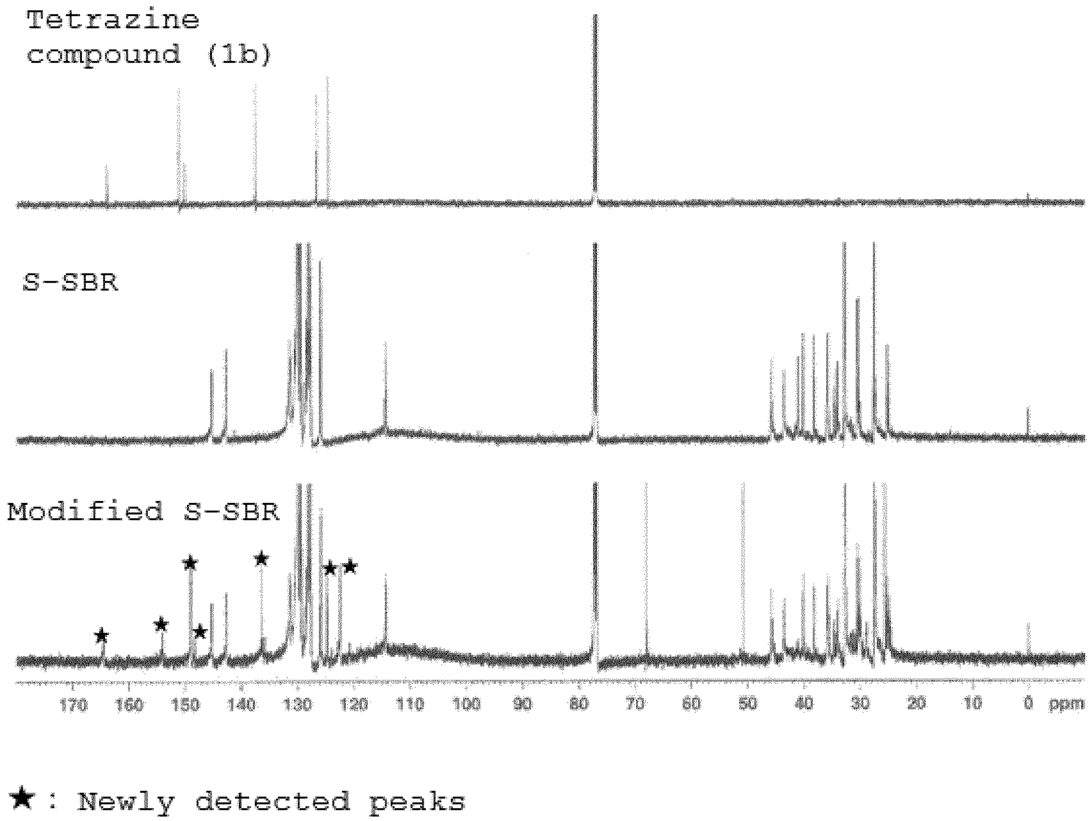
Tetrazine
compound (1b)
S-SBR
Modified S-SBR
170 160 150 140 130 120 110 100 90 80 70 60 50 40 30 20 10 0 ppm
★ : Newly detected peaks

## INTERNATIONAL SEARCH REPORT

International application No.
PCT/JP2018/009121

A. CLASSIFICATION OF SUBJECT MATTER
Int.Cl. C08C19/22(2006.01)i, B60C1/00(2006.01)i, C08K3/04(2006.01)i, C08K3/36(2006.01)i, C08L15/00(2006.01)i, C08L21/00(2006.01)i

According to International Patent Classification (IPC) or to both national classification and IPC

B. FIELDS SEARCHED

Minimum documentation searched (classification system followed by classification symbols)
Int.Cl. C08C19/00-19/44, B60C1/00, C08K3/00-13/08, C08L7/00-21/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| PX | WO 2017/057758 A1 (OTSUKA CHEMICAL CO., LTD.) 06 April 2017, claims, paragraphs [0059]-[0129], examples & JP 2017-179376 A | 1-5, 8-13 |
| A | JP 2015-93928 A (TOYO TIRE AND RUBBER CO., LTD.) 18 May 2015, claims, paragraphs [0019]-[0025], examples (Family: none) | 1-13 |
| A | JP 49-47439 A (DAINICHI-NIPPON CABLES, LTD.) 08 May 1974, claims, page 2, lower right column, lines 16-19, examples 7, 8 (Family: none) | 1-13 |
| A | US 2014/0113844 A1 (EXXONMOBIL RESEARCH AND ENGINEERING COMPANY) 24 April 2014, example 6 & WO 2014/066444 A1 | 1-3 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 May 2018 (08.05.2018) | 22 May 2018 (22.05.2018) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003514079 A
- JP 2003523472 A
- JP 2013108004 A
- JP 2000169631 A
- JP 2005220323 A